# EUROPEAN PATENT APPLICATION

(11) **EP 1 575 015 A1**
(43) Date of publication of application: **14.09.2005**
(21) Application number: 04405148.0
(22) Date of filing: 12.03.2004
(51) Int. Cl.: G09B 23/28

(54) **Actuator for an elongated object for a force feedback generating device**

(71) Applicant: Xitact S.A., 1110 Morges (CH)
(72) Inventor: Vecerina Ivan, 1010 Lausanne (CH); Zoethout Jurjen, 1530 Payerne (NL); Betrisey Stéphane, 1110 Morges (CH)
(74) Representative: Richard, François-Régis

(57) **Abstract**

An actuator for an elongated object comprises one or two electromagnetically-activated braking mechanism (40, 50) to provide haptic sensations in conjunction with a device that tracks a rotationally symmetric instrument (1) manipulated by a user, a motion sensor providing information about the longitudinal movement and about the rotational movement of the instrument and a control unit receiving movement information from the motion sensor and connected with the electromagnetically-activated braking mechanism (40, 50). In the case of two braking mechanism (40, 50) a braking force is applied on a moving instrument (1) for both degrees of freedom independently. The control unit comprises calculating means to simulate a directional force experienced by the user by adding or subtracting the calculated braking force from a friction force, according to the direction of the motion of the instrument (1).

## Description

### Field of the invention

The present invention relates to a device that provides tactile sensations to a user manipulating elongated instruments. In particular, this device can be used to provide realistic haptic sensations in simulations of medical interventions where catheters or other instruments are inserted through an entry port to interact with a virtual environment; the device can be useful as well to provide enhanced tactile sensations during a real procedure to help guide the gestures of a surgeon or interventionist - for enhanced reality and computer-assisted interventions. The simulations can be used to train the performance of minimally invasive interventions such as percutaneous procedures, where instruments are inserted through the skin into the patient body, under various kinds of guidance or visualization: X-ray (most common), ultrasound, or other means of visualizing or identifying the position of the instruments.

Haptic sensations sometimes provide essential information to the therapist performing a percutaneous procedure. Various types of forces or resistances opposing the motion of instruments can be encountered. Among many possible examples: the tip of the instrument may hit an obstacle that prevents further motion; while advancing along a vessel, the traversal of a narrowing or tortuosity can generate an increased resistance; a "pop" (brief drop in resistance) may be felt as the tip of a catheter enters a branch of a vessel; the tip of the instrument may skip over irregularities of a cavity's wall; the elastic bending or unfolding of a catheter may also generate an elastic directional force felt by the interventionist.

Real medical catheters are designed to precisely transmit forces and motion between the tip of the instrument and the hand of a physician, allowing him to feel the structures that are being encountered or manipulated. During simulated procedures in particular, it is important to reproduce these haptic sensations as reliably as possible. During actual procedures, a similar actuator can be used to enhance the tactile sensations perceived by an interventionist - for example to impede access to a dangerous area.

### Background of the invention

Prior art discloses force feedback devices that involve the motion and inertia of relatively heavy parts and motors - which interfere with the free motion of the catheter and with the precise reproduction of forces.

For example, the device proposed in EP 0 970 714 includes a carriage assembly holding a catheter between a pair of opposed pinch wheels. This carriage assembly rotates to rotate the said catheter about its longitudinal axis, and the pinch wheels rotate to translate the object axially. The inertia of this mechanism, however, interferes with the free motion of the catheter in a perceptible fashion. Furthermore, driving the motion of the pinch wheels mounted on the rotating carriage assembly is problematic.

Another invention, in US 6.267,599, discloses a framed assembly mounted on parallel guide rails; rotation sensors are mounted on the framed assembly. A motorized system ensures that this assembly follows the motion of the tip of an inserted instrument. Servomotors and force sensors attempt to compensate for the friction and inertia of the system, while providing force feedback to the user.

Because these systems rely on several parts that are in continuous contact with the inserted instrument, they all suffer from the fact that these actuating devices, in idle state, generate inertia and friction forces that are perceptible to a user manipulating the system.

The need remains, therefore, for a device that can generate haptic force-feedback on elongated instruments without interfering with the free motion of these instruments when no forces are to be generated.

The present invention is the result of a different approach, which takes advantage of contact-free or low-friction tracking mechanisms, for which patent applications of the applicant are copending as EP 03 405 694.

### Summary of the invention

The present invention relates on the insight that an actuating device that only engages with the instrument when a force needs to be generated can improve the quality of the generated haptic sensations, and increase the overall realism of a simulation. During a real procedure as well, it allows a constraint-free manipulation of the instruments until forces actually are to be generated.

Furthermore, an actuating device composed of a simple brake that engages with the instrument is in many cases sufficient to generate the desired haptic sensations - as long the braking force is controlled precisely, and in a fashion where it is dependent on the motion of the instrument. Such a mechanism is especially effective when a friction-like resistance to motion needs to be generated on a continuous basis: the user can be given the perception that an active elastic force is being applied by effectively reducing the braking force when the instrument is moved in a direction that follows the active elastic force, and increasing the resistance when the instrument is pushed against the active force. However, an optimum response time and a sensitivity to small displacement is required for a proper rendering of haptic sensations.

The present application discloses how a braking system can be used in conjunction with a motion-tracking device to reproduce a variety of haptic sensations on an inserted instrument, and describes specific embodiments of this system. It explains how a processor can use a description of pre-computed forces (provided for example by a simulation model) to instantly control actuators based on motion information. Also, it presents enhancements of the invention that can be used to apply a braking force on one degree of freedom only, or to engage an active force-feedback mechanism able to generate active forces that may control the motion of an inserted instrument.

### Brief description of the drawings

- Fig. 1: shows an overview of a force feedback device composed of a braking system used in combination with an instrument tracking device,
- Fig. 2: shows a specific embodiment of the actuator of the braking or engaging mechanism,
- Fig. 3: shows how the system may let the user perceive the effect of an active directional force by altering the braking force according to the motion of the instrument,
- Fig. 4: shows a variation of the device disclosed in Fig. 2 which can be used to improve the perceived elasticity of the system,
- Fig. 5: shows variations of the device disclosed in Fig 1, which are able to individually constrain the motion of the instrument along a specific axis of motion, and
- Fig. 6: shows how an active actuating system can be combined with an engaging mechanism to allow free motion of the instrument when no force is being applied.

### Detailed description of the invention

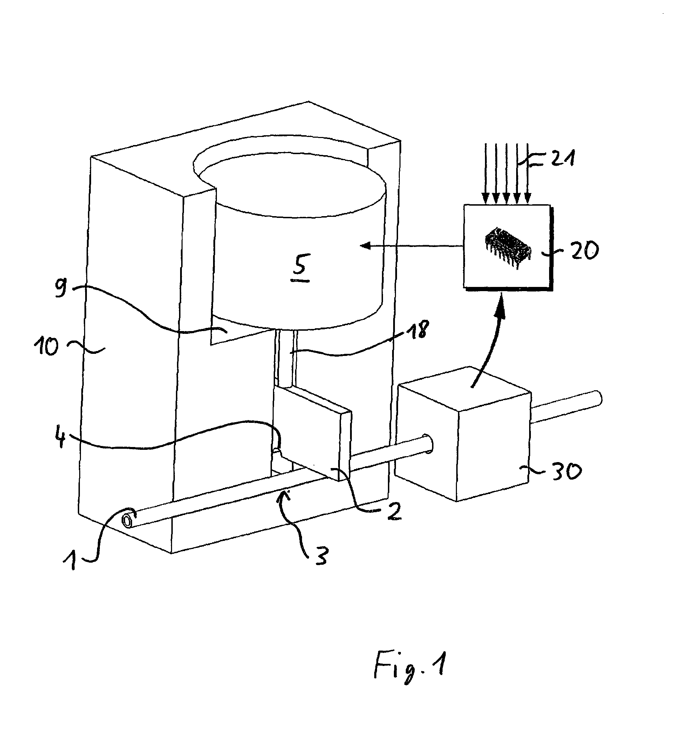

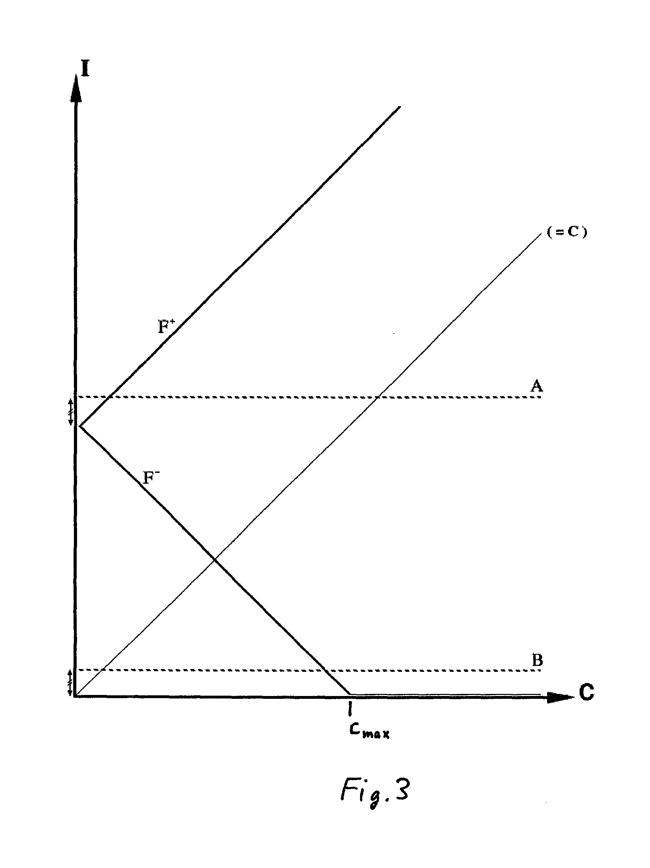

Fig. 1 shows an overview of an electromagnetic braking system that can be applied to catheters and other elongated instruments 1. Instrument 1 is the catheter or other apparatus that is inserted through the device, and being manipulated by a user. The system is associated with a motion sensor 30 that measures the motion of the instrument 1 that traverses both elements. The motion sensor 30 provides information about the longitudinal movement and about the rotational movement of the instrument 1.

The processor 20, which may be a simple electronic circuit, continuously receives from the tracking device 30 information about the longitudinal and rotational motion of the instrument 1. Based on a motion axis and orientation signal received from the tracking device 30, the processor 20 selects one of several braking forces computed and by an external source (shown as arrows 21). The external source can be a PC running a virtual simulation of an environment with which the instrument 1 is supposed to interact, or any model used to define forces to be applied.

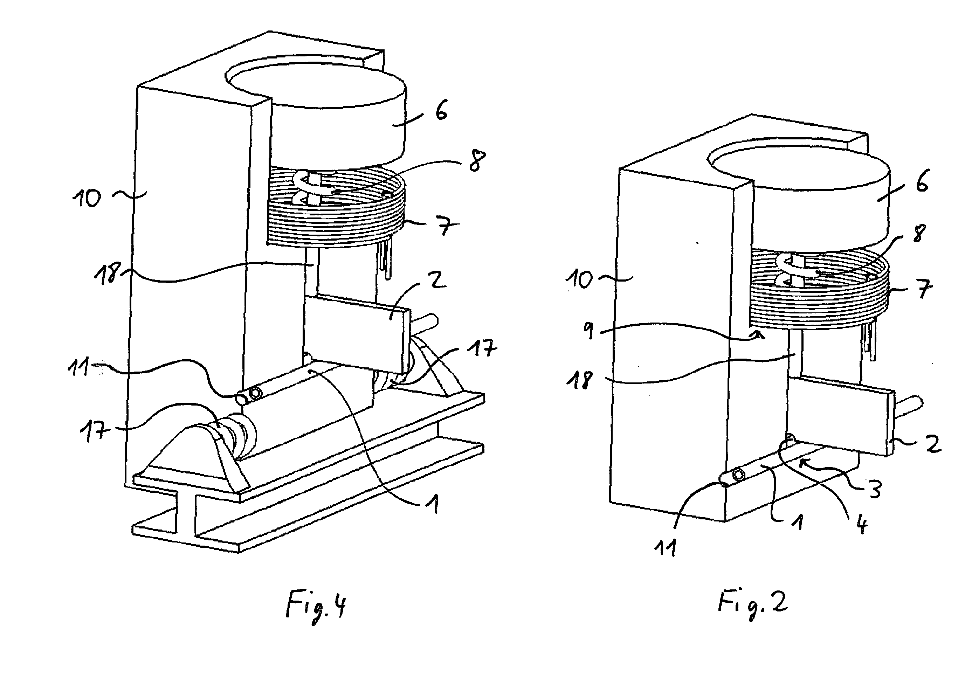

This instrument 1 passes between a pressing clip 2 and a counter-surface 3. The pressing clip 2 comprises a recess 4 being complementary to the form of instrument 1. The pressing clip 2 is attached to an actuator 5. This actuator can be a hydraulic piston or even a stepper motor. In a preferred embodiment, it is an electromagnetic actuator, such as the one described in Fig. 2.

The selected braking force signal is transmitted to the linear actuator 5, which presses a braking system (pressing clip) 2 against the instrument 1, pinching it against the wall 3 of a cavity it traverses, thereby creating a resistance to its motion. Using a system of levers (see Fig. 5 for a possible embodiment), the counter-surface 5 may also be moved against the instrument and engaged only when needed.

Fig. 2 presents a preferred embodiment of the linear force actuator 5, based on an electromagnetic actuation system. The force signal is an electrical current applied to a coil 7, which acts as an electromagnet. When activated, said electromagnet attracts a permanent magnet 6. This attraction force is transmitted through shaft 18 to the braking system 2 that will pinch the instrument and create a resistance to its motion. A springloaded mechanism 8 may ensure that, when the electromagnet 7 is idle, the brake 2 is dissociated from the instrument. The spring 8 pushes against an abutment surface 9 within body 10 of the device and against the magnetic mass 6, which can be a permanent magnet. As a current is applied through the coil 7, a magnetic field is generated that pushes the pressing clip 2 against instrument 1, which is thereby pinched against the counter-surface 3. Counter-surface 3 is, in the shown embodiment, part of the bottom surface 11 of the instrument 1 guiding hollow room.

By adjusting the current going through the coil 7, using pulse width modulation or voltage control, the pressure of the brake onto the instrument 1 can be controlled accurately and with excellent response times, of well under 1 millisecond.

The tracking device 30 should preferably be a high-resolution sensor sensitive to a minute motion of instrument 1 like the optical tracking device of the applicant in the copending application EP 03 405 694.

An important facet of this invention is that the braking system is used in combination with a high-resolution friction-free instrument-tracking unit. At a control rate that is preferably of several kilohertz, processor 20 receives motion information from the tracking unit 30, and immediately adapts the pressure of the brake based on the motion of the instrument according to pre-computed forces 21. For example, the external source may pre-compute forces for each direction of the instrument motion that can be reported by tracking unit 30, and eventually for various amplitudes of motion, and ranges of total displacements of the instrument.

In an ideal application for this embodiment of the invention, the braking device is used to generate a continuous friction force, creating a resistance to the motion of the instrument 1. When this is the case an active (or elastic) directional force can be simulated by reducing the braking force applied on the instrument when said instrument is moved in the same direction as the active force, and increase it when the instrument is moved in an opposite direction.

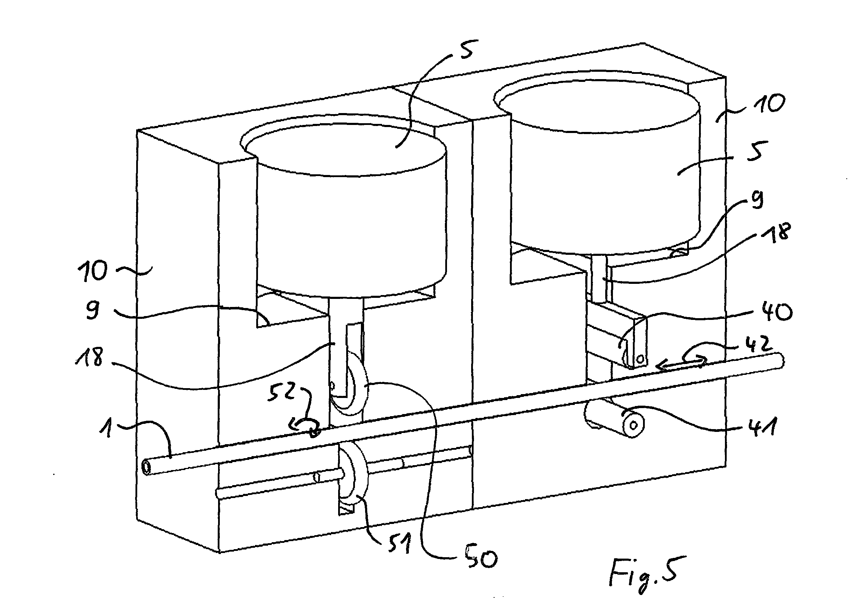

Fig. 3 illustrates, along a single axis of motion, how the desired braking force (F+,F-) can be computed by combining, according to the direction of the instrument's motion, a passive friction force A and an active directional force C that need to be produced. When applying a breaking force to simulate a friction force A, an estimate of the friction level intrinsic to the device is subtracted first. Given a certain friction force level to be produced A, the intrinsic friction in the tracking system B, and the directional force to be produced C, the braking force is computed for each direction of motion.

The force F+ to be applied when the instrument moves in a direction opposite to the active force C is computed using the following equation: F+ = (A-C)+B.

The force F- to be applied when the instrument moves in the direction of the active force C is computed using: F- = (A-C)-B. However, this force may not have a negative value. This implies that the maximum active force that can be simulated, Cmax, is the difference between the friction force to be simulated at a given point in time and the intrinsic friction of the device.

Because a small motion of the instrument is required to detect a change in the motion direction or force applied to the instrument, the user may need initially to overcome the friction currently applied to the instrument. This issue is mitigated by using a high-resolution tracking device 30, so a small displacement that is allowed by the elasticity or play of the braking component is sufficient to detect a change in the direction of the motion. Alternatively, the braking device can be assembled as to ensure that a small-range of free motion is allowed by the braking system. Fig. 4 illustrates such an assembly, where the braking device is kept in place by springs 17, allowing it to follow the motion of the instrument 1 on a small longitudinal distance before the effect of the brake 2 can be perceived. This is true in the range where the spring force of springs 17 is smaller then the braking force applied by breaking plate 2. This system can be used to compensate for an insufficiently sensitive tracking system 30, or to alter the perceived "elasticity" of the force feedback system.

The principle described in Fig. 4 can be applied to two or more axes of motion. When a single brake uniformly affects all motion axes, the braking force can either be determined based on the predominant direction of motion, or by using various forms of interpolation between the forces pre-computed for each component of the motion vector.

Forces may be pre-computed not only for multiple motion directions, but also for multiple relative positions of the instrument. Processor 20 can then react to the current motion direction and to the total displacement reported by tracking unit 30 since the forces were computed.

The computations described above can be used to compute force signal on the input of the processor 20, which will select the actuating force F+ or F- based on the direction of the instrument's motion along one axis of freedom. Such a computation can be performed for each axis of motion of instrument 1 inside the tracking device 30. However, because the actuator described in Fig. 1 and 2 affects both the longitudinal and rotational motion of instrument 1, the processor 20 may have to select a dominant axis of motion based on the motion information received from sensor 30. Alternatively, it might use some form of interpolation or combination between input forces specified along each axis of motion. Yet another approach to address this issue is disclosed in Fig. 5.

When motion occurs simultaneously along multiple axes, it is sometimes desirable to independently brake on one axis of motion while allowing free motion along an orthogonal axis - for example when the instrument tip hits a perpendicular wall. A modification of the previously described braking system can allow such an independent braking of a single axis of motion. Two embodiments of a directional braking system are illustrated in Fig. 5: a wheel 50 or rolling barrel 40 is added to the braking component, to allow a low-friction motion of the instrument 1 in the direction of the wheel's motion. In the left part of Fig. 5, braking component 50 pinches the instrument 1 between two wheels 50 and 51 whose axes are parallel to the axis of the instrument 1. The wheels 50, 51 allow a low friction rotational motion (arrow 52) of the instrument 1, and will primarily interfere with the longitudinal motion (arrow 42) of the instrument 1. Inversely, breaking device 40, which pinches the instrument 1 between parallel rollers 40 and 41, whose axes are orthogonal to the axis of the instrument 1, allow the low friction longitudinal motion (arrow 42) of the instrument 1, and will primarily interfere with a rotational motion (arrow 52) of the instrument 1.

Using the principles illustrated above in Figure 1, 3, and 5, the two resulting forces computed along each axis of motion (as per Fig. 3) can be transmitted to independent processors dedicated to each axis of motion (as per Fig. 1) and transmitted to independent actuators 50 and 40 (as illustrated in Fig. 5).

Alternatively, the either of the braking devices in Fig. 5 can be combined with the device illustrated in Fig. 1. The preferred simple combination of brakes is the use of the device on the left side of Fig. 5, still allowing the low friction rotation of the instrument 1 but braking the longitudinal motion together with the more simpler device according to Fig. 1, which device is adapted to brake both movements (longitudinal and rotational). The unit shown on the left side of Fig. 5 then allows to apply an increased braking force to the longitudinal movement only. This is useful to simulate the resistance perceived when the instrument hits a perpendicular wall, and the rotation and advancement of the instrument and attempted simultaneously.

In any case, a calibration of the effective resistance to motion applied by each braking device along each axis of motion can be desirable. Processors of each braking unit may exchange force signals and adjust the output force to optimize the end result.

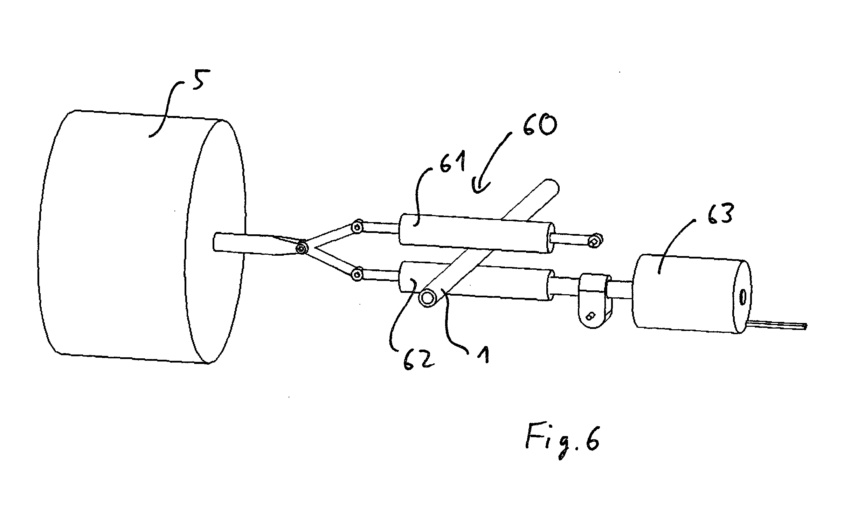

A final embodiment of the invention is illustrated in Fig. 6. In this figure, a different arrangement of the linear actuator 60 is illustrated. By exercising a tracking on the levers, the actuator 5 brings rollers 61 and 62 closer together, engaging the rollers with instrument 1. The motion of at least one of the rollers is controlled by motor 63.

When no active driving force needs to be applied by motor 63, the rollers 61 and 62 are left disjoint and are not in contact with instrument 1. When a force needs to be applied using the motor, to generate haptic force feedback or to actively move instrument 1 longitudinally, the linear actuator 5 closes the gap between the rollers 61 and 62 and engages the instrument 1 between them. As a result, this design integrates an active instrument driving mechanism, while simultaneously ensuring that, when the mechanism is idle, no unwanted forces (caused by inertia or friction within the motor) will interfere with the free motion of instrument 1.

When motor 63 is idle or actively kept immobile, the linear actuator 6 in Fig. 6 can be used to use the device identically to the breaking system in Fig. 1.

## Claims

1. Actuator for an elongated object, comprising one or two braking mechanisms (2; 40, 50, 60) to provide haptic sensations for a rotationally symmetric instrument (1) manipulated by a user, a motion sensor (30) providing information about the longitudinal movement and about the rotational movement of the instrument (1) and a control unit (20) that is connected with the braking mechanism (2; 40, 50, 60), wherein the control unit (20) controls the braking forces applied by the breaking mechanism(s) based on motion information received from the motion sensor (30), wherein in the case of only one braking mechanism (2) it simultaneously can apply a braking force on a moving instrument (1) for both degrees of freedom, wherein in the case of two braking mechanisms (40, 50, 60) they can apply a braking force on a moving instrument (1) for both degrees of freedom independently.

2. Actuator according to claim 1, wherein as the instrument (1) moves along a given axis of motion direction (42, 52), the control unit (20) calculates a control signal for the braking mechanism(s) (2, 40, 50, 60) to simulate a directional force to be experienced by the user by generating a braking forces (F+) that is the sum of a friction force (A-B) and the directional force (C) when the instrument is moved against the force (C), and a breaking force (F-) by subtracting the breaking force from the friction force (A-B) when the instrument is moved in the opposite direction.

3. Actuator according to claim 1 or 2, wherein it is used in a simulated or a real procedure.

4. Actuator according to one of claims 1 to 3, wherein the braking mechanism (2; 40, 50, 60) comprises an electromagnetic linear actuator (5) to control the engagement of the brake.

5. Actuator according to one of claims 1 to 4, wherein the braking mechanism (2; 40, 50, 60) comprises a spring-mounted braking device (17) mounted in line with the instrument (1) to allow the determination of the force externally applied to said instrument (1), and especially the user-intended direction of motion of said instrument (1).

6. Actuator according to one of claims 1 to 5, wherein every braking mechanism (40; 50; 60) comprises rotating elements (40, 41; 50, 51; 61, 62) mounted to engage the instrument.

7. Actuator according to claim 6, wherein the rotating elements (40, 41; 50, 51; 61, 62) of the two different braking mechanisms (40; 50; 60) are mounted in a way that the rolling surfaces of the rotating elements (40, 41; 50, 51; 61, 62) are oriented one perpendicular to the other to independently brake one axis of motion.

8. Actuator according to one of claims 1 to 7, wherein a linear actuator (63) is provided to engage a driving rotating element (62).
